**Europäisches Patentamt**

**European Patent Office**

**Office européen des brevets**

(19)

(11) Veröffentlichungsnummer: **0 074 639**
**B1**

(12) # EUROPÄISCHE PATENTSCHRIFT

(45) Veröffentlichungstag der Patentschrift:
**14.05.86**

(21) Anmeldenummer: **82108363.1**

(22) Anmeldetag: **10.09.82**

(51) Int. Cl.⁴: **B 23 Q 1/24**

(54) **Selbstzentrierende Lünette.**

(30) Priorität: **16.09.81 IT 353081**

(43) Veröffentlichungstag der Anmeldung:
**23.03.83 Patentblatt 83/12**

(45) Bekanntmachung des Hinweises auf die Patenterteilung:
**14.05.86 Patentblatt 86/20**

(84) Benannte Vertragsstaaten:
**AT BE CH DE FR GB LI LU NL SE**

(56) Entgegenhaltungen:
**DE - A - 2 851 961**
**DE - B - 1 295 578**
**DE - C - 422 198**
**FR - A - 1 483 772**
**FR - A - 2 118 995**
**FR - A - 2 223 543**
**GB - A - 2 041 263**
**US - A - 4 265 150**

(73) Patentinhaber: **MARTINSON S.r.l., Via Val di Setta 23,
I-40040 Rioveggio (Bologna) (IT)**

(72) Erfinder: **Ruggeri, Stefano, Via Val di Setta 23,
I-40040 Rioveggio (Bologna) (IT)**

(74) Vertreter: **Beszédes, Stephan G. Dr., Münchener
Strasse 80a Postfach 1168, D-8060 Dachau (DE)**

## Beschreibung

Die Erfindung betrifft eine selbstzentrierende Lünette mit einem an zwei in einem Gehäuse gelagerten Hebelarmen angreifenden Verstellglied, wobei an den äusseren Enden des Verstellgliedes und der Hebelarme Greifrollen und an dem Verstellglied ein Kreuzsupport angeordnet sind.

Eine derartige Lünette ist aus der DE-A-1 602 740 bekannt. Bei dieser Einrichtung zum Aufspannen und/oder zur Halterung eines Werkstückes auf Drehmaschinen werden die Hebelarme durch zwei an dem inneren Ende angreifende Keilflächen aufeinander zubewegt, wenn das Verstellglied nach aussen verschoben wird. Um ein Öffnen der Hebelarme beim Zurückziehen des Verstellgliedes zu gewährleisten, sind an den Hebelarmen Zugfedern angeordnet. Diese bekannte Einrichtung ist nicht dazu geeignet, ein Werkstück durch Spreizwirkung der Hebelarme festzuklemmen. Auch ist aus der DE-A-1 602 740 nirgends zu entnehmen, dass die Hebelarme austauschbar sein sollen. Ein derartiges Vorgehen wäre bei dieser bekannten Lünette auch umständlich, da dazu die Rückstellfedern gelöst und wieder befestigt werden müssten, während bei der erfindungsgemässen Lünette die Hebelarme ohne komplizierte Manipulation ausgetauscht werden können.

Der Erfindung liegt die Aufgabe zugrunde, eine gattungsgemässe Lünette derart auszubilden, dass sie neben einer Greiffunktion auch eine Spreizfunktion durchführen kann und dass eine Anpassung an einen grossen Bereich unterschiedlicher Durchmesser der Werkstücke möglich ist.

Diese Aufgabe wird erfindungsgemäss dadurch gelöst, dass die inneren Enden der Hebelarme über Langlöcher in dem Verstellglied zwangsgeführt sind und dass die Hebelarme durch andere Hebelarme verschiedener Abmessung unter Beibehaltung der Eigenschaft der Selbstzentrierung auswechselbar sind.

Durch die Zwangsführung der inneren Enden der Hebelarme kann je nach Zug oder Druck des Verstellgliedes eine Kraft auf die Aussenseite oder die Innenseite eines Werkstückes übertragen werden. Dadurch wird die Doppelfunktion, das heisst neben der Greiffunktion auch die Spreizfunktion der Lünette erreicht. Da ausserdem durch die Zwangsführung keine Rückstellfedern erforderlich sind, ist ein einfaches Auswechseln der Hebelarme möglich. Damit kann mit einfachen Mitteln erreicht werden, dass die Lünette für Werkstücke stark unterschiedlichen Durchmessers angewendet werden kann.

Um die Leichtgängigkeit der Lünette zu gewährleisten, können an dem Kreuzsupport in die Langlöcher eingreifende Rollen angeordnet sein, oder an dem inneren Endbereich des Hebelarms kann eine Führungskurve und an dem Kreuzsupport eine Führungsrolle, die an dieser Führungskurve anliegt, vorgesehen sein.

Zur Betätigung der Lünette kann eine an eine Kopiervorrichtung einer Drehbank anschliessbare, auf das Verstellglied wirkende hydraulische Einheit vorgesehen sein.

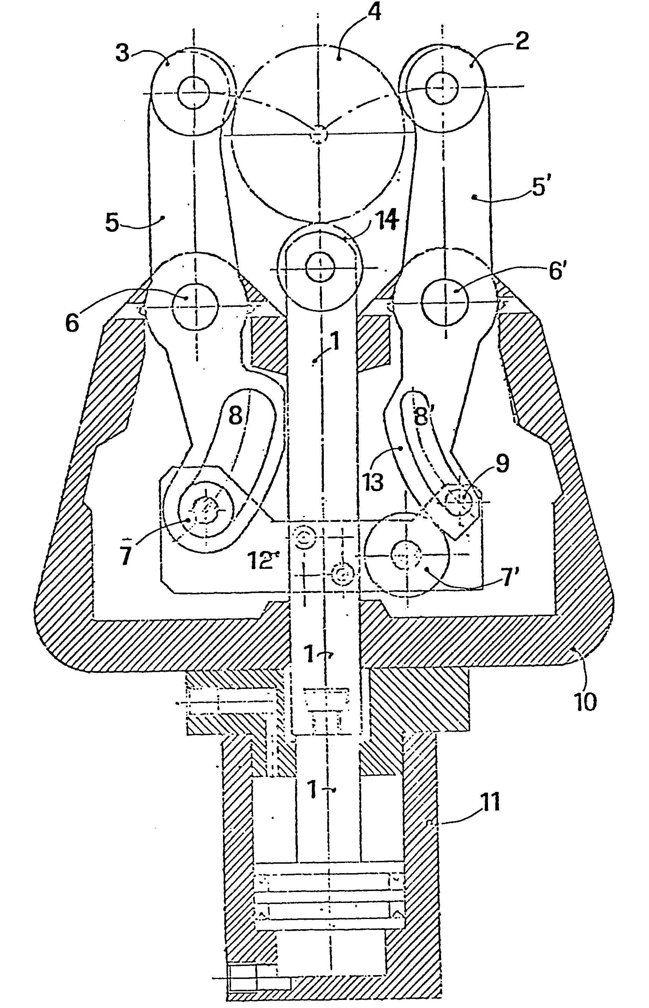

Die Erfindung wird anhand der folgenden beispielhaften Darlegung in Verbindung mit der beiliegenden Zeichnung näher erläutert.

Die Figur zeigt einen schematischen Schnitt durch eine erfindungsgemässe selbstzentrierende Lünette in zwei Ausführungsformen, welche zum Vergleich symmetrisch zueinander dargestellt sind.

In der Figur ist ein Werkstück 4 von aussen durch die Greifwirkung einer Greifdreierkombination, bestehend aus Rollen 14, 2, 3 gehalten. Eine entsprechende Greifwirkung, welche zur Vereinfachung der Darstellung in der Figur nicht gezeigt ist, kann selbstverständlich im Inneren eines innen hohlen Werkstücks ausgebildet werden, wobei die Greifdreierkombination das Werkstück 4 am Ende durch Spreizung der drei Rollen ergreift.

Die Rolle 14 ist am äusseren Ende eines zentralen Verstellgliedes 1 angebracht. Dieses zentrale Verstellglied 1 ist in den zwei Richtungen einer Hin- und Rückbewegung, d.h. zum Schliessen und Öffnen der selbstzentrierenden Lünette, mit Hilfe einer bekannten doppelwirkenden Einheit 11 mit Fluidsteuerung axial verschiebbar und gegebenenfalls an bekannte Systeme mit Kopierschablone gemäss einer Veränderung des Durchmessers des Werkstückes koppelbar.

Das zentrale Verstellglied 1 ist mit einem auswechselbaren Kreuzsupport 12 verbunden. An dem Kreuzsupport 12 ist in der linken Ausführungsform eine Kopplungsrolle 7 angebracht, welche in einer Nut 8 mit Doppelfunktion geführt ist, die am inneren Ende eines austauschbaren Hebelarmes 5 ausgespart ist. Dieser Hebelarm 5 ist bei 6 an ein Schalenlager am Gehäuse oder Körper 10 der Lünette angelenkt. Dieser auswechselbare Hebelarm 5 trägt an seinem äusseren Ende die Greifrolle 3. Symmetrisch zur Achse des zentralen Verstellgliedes 1 ist eine Rolle 2 an dem äusseren Ende eines zweiten auswechselbaren Hebelarmes 5', welcher bei 6' angelenkt ist, angebracht. In diesem Hebelarm 5' ist (als zweites Ausführungsbeispiel) am inneren Ende eine Nut 8' ausgespart, in welcher eine Rolle 9 geführt ist, die an einem Ansatz des Kreuzsupports 12 angeordnet ist. Ferner ist an dem Kreuzsupport 12 eine Rolle 7' gelagert, welche in Anlage mit der an der Aussenseite des zweiten Hebelarmes 5 ausgebildeten Führungskurve 13 gedrückt wird, um die Winkelverschiebung dieses Hebelarmes 5' an die Axialbewegung der Rolle 7' zu koppeln.

Die Wirkungsweise der selbstzentrierenden Lünette wird nachstehend erläutert.

Während der Bearbeitung dreht sich das Werkstück 4 und wird den beachtlichen Belastungen des in der Figur nicht dargestellten Werkzeuges unterworfen. Die Dreierkombination von Rollen 14, 2, 3 hält das ergriffene Werkstück fest und stellt seine Koaxialität mit der Achse der Werkzeugmaschine sicher. Die Klemmwirkung (im in der Figur dargestellten Fall handelt es sich um ein Klemmen von aussen) wird vom Druck der von bekannten hydraulischen Vorrichtungen gesteuerten Einheit 11 sichergestellt. Analog wird die Klemmwirkung bei einer nicht gezeigten Spreizung ebenfalls durch die Einheit 11 bewirkt, welche entsprechend der Doppelfunktion der Lünette doppelwirkend ist.

Die Greifdreierkombination von Rollen 14, 2, 3 ist in beiden Klemmrichtungen (Greifen und Spreizen) selbstzentrierend. Das automatische Zentrieren für jeden beliebigen Durchmesser wird durch die Tatsache sichergestellt, dass die Radialbewegungen der drei Greifrollen 14, 2, 3 gleichzeitig erfolgen. Wenn die Rolle 14 sich vom Zentrum verschiebt, folgen ihr auch die beiden anderen Rollen nach, und die Greifdreierkombination führt ihre Wirkung automatisch in den zwei Betätigungsrichtungen aus, entweder zum Öffnen (Spreizen) oder zum Schliessen (Greifen). Die in der Figur zum Vergleich dargestellten zwei Ausführungsformen zeigen die Vielseitigkeit der Vorrichtung. Die Hebelarme 5, 5' sind leicht auswechselbar, und dies gestattet die Erweiterung des Bereichs einzuspannender Werkstückdurchmesser. Diese Auswechselbarkeit der Hebelarme 5, 5' und die Möglichkeit des Auswechselns des Kreuzsupportes 12 stellen einen der Hauptvorteile der vorliegenden Erfindung dar, weil sie beachtliche Betriebseinsparungen ermöglichen. Es kann ein einziger selbstzentrierender Lünettenkörper mit Hebelarmen verschiedener Abmessungen ausgerüstet werden, was natürlich die Erweiterung des Abmessungsbereiches der Einspannmöglichkeiten einer einzigen Lünette erbringt. Überdies können die Rollen 14, 2, 3 zweckmässig zum Greifen eines Werkstücks von innen angepasst werden. Durch Spreizen der Rollen kann ein Werkstück innen an einem hohlen Ende gehalten werden zur Bearbeitung an der Aussenfläche. Dazu sind die Rollen 14, 2, 3 an von den Hebelarmen abkragenden Achsen gehalten.

Eine weitere vorteilhafte Anwendung der selbstzentrierenden Lünette mit Doppelfunktion wird erreicht, wenn sie am Support als bewegliche Lünette, beispielsweise auf einer Schablonendrehbank beziehungsweise Kopierdrehbank, eingesetzt wird zur Bearbeitung von Werkstükken mit schwankenden Durchmessern. In diesen Fällen muss die bewegliche Lünette ihren Greifdurchmesser stetig ändern, und dies ist durch Verbinden der Einheit 11 mit dem Fühlergetriebe der hydraulischen Formkopiervorrichtung möglich. Durch diese spezielle Anwendung zeichnet sich die erfindungsgemässe Lünette als Kopierlünette aus. Diese Kopierlünette mit Doppelfunktion und auswechselbarer Greifeinrichtung stellt ein Werkzeug höchster Einfachheit und grösster Zuverlässigkeit dar.

Bei den mit Rückholfedern ausgestatteten Lünetten können die von diesen Rückholfedern herbeigeführten Vibrationen, welche beachtliche Nachteile sowohl bei den Bearbeitungen als auch hinsichtlich der Lebensdauer der Lünetten selbst hervorrufen, nicht beseitigt werden. Durch die erfindungsgemässen Nuten mit Doppelfunktion als Kopplungsgelenkstelle kann die Gleichzeitigkeit und Übereinstimmung der radialen Verschiebungen in den beiden Richtungen zum Schliessen und Öffnen der Greifdreierkombination und auch die Kopplung mit Kopiervorrichtungen von Werkzeugmaschinen mit Formwiedergabeelementen sichergestellt werden.

Wie beschrieben, können die erfindungsgemässen Lünetten verwendet werden, um von innen das Ende eines hohlen Werkstücks zu halten. Weiter ist ersichtlich, dass die Alternativausführungsform, welche zum Vergleich im rechten Teil der Figur dargestellt ist, d.h. die mit der Nut 8', der in dieser Nut 8' gelagerten Rolle 9 und der Rolle 7' in Anlage mit der Führungskurve 13 des inneren Endes des Hebelarmes 5', bei gleichen Abmessungen der Lünette, d.h. bei gleichem inneren Fassungsvermögen des Gehäuses 10, sich für schwerere Bearbeitungen für grössere Abmessungen der Rolle 7' gut eignet. Die Nut 8' und die in ihr gelagerte Rolle 9 können, da sie geringere Abmessungen haben, als Gelenkstellen zum einfachen Rückholen oder zum Spreizen verminderter Klemmwirkung verwendet werden.

Es ist ersichtlich, dass unterschiedliche Abmessungen, Werkstoffe und Steuer- und Regelvorrichtungen verwendet werden können, ohne aus dem Bereich der Erfindung zu führen, sofern zur Kopplung an die Axialverschiebung der zentralen Steuerungsstange zwei mit Nuten versehene Hebelarme zur Verwirklichung der Doppelfunktion Öffnen und/oder Schliessen der Greifeinrichtung verwendet werden. Unter die Erfindung fallen daher alle diejenigen selbstzentrierenden Lünetten mit Doppelfunktion, welche frei von Rückholfedern und auch von Zahnrädern und Zahnstangen sind und in welchen zwei der Hebel der Greifdreierkombination mit Nuten mit Doppelfunktion versehen sind, die den Zweck der Kopplung der Winkelöffnung und -schliessung dieser Hebelarme an die Axialverschiebung des zentralen Verstellgliedes haben. Gerade die Nuten der symmetrischen Hebelarme erbringen die Doppelfunktion des Greifens, d.h. durch Schliessen eine Klemmwirkung von aussen und durch Spreizen eine Klemmwirkung von innen.

**Patentansprüche**

1. Selbstzentrierende Lünette mit einem an zwei in einem Gehäuse (10) gelagerten Hebelarmen (5, 5') angreifenden Verstellglied (1), wobei an den äusseren Enden des Verstellgliedes (1) und der Hebelarme (5, 5') Greifrollen (2, 3, 14) und an dem Verstellglied (1) ein Kreuzsupport (12) angeordnet sind, dadurch gekennzeichnet, dass die inneren Enden der Hebelarme (5, 5') über Langlöcher (8, 8') an dem Kreuzsupport (12) zwangsgeführt sind und dass die Hebelarme (5, 5') durch andere Hebelarme verschiedener Abmessung unter Beibehaltung der Eigenschaft der Selbstzentrierung auswechselbar sind.

2. Lünette nach Anspruch 1, dadurch gekennzeichnet, dass an dem Kreuzsupport (12) in die Langlöcher (8, 8') eingreifende Rollen (7, 9) angeordnet sind.

3. Lünette nach Anspruch 1 oder 2, dadurch gekennzeichnet, dass an dem inneren Endbereich des Hebelarms (5′) zusätzlich eine Führungskurve (13) und an dem Kreuzsupport (12) eine Führungsrolle (7′) vorgesehen sind.

## Claims

1. Self-centering steady, comprising an adjusting element (1) engaging in two lever arms (5, 5′) beared in a housing (10), wherein the outermost ends of the adjusting element (1) and the lever arms (5, 5′) are provided with grip rolls (2, 3, 14) and the adjusting element (1) is provided with a cross support (12), characterized in that the internal ends of the lever arms (5, 5′) are forced guided at the cross support (12) by means of slots (8, 8′), and that the lever arms (5, 5′) are exchangeable by other lever arms of different dimensions whereby the feature of self-centering is maintained.

2. Steady according to claim 1, characterized in that the cross support (12) is provided with rolls (7, 9) engaging in the slots (8, 8′).

3. Steady according to claim 1 or 2, characterized in that the internal end section of the lever arms (5′) in addition are provided with a guiding curve (13) and that the cross support (12) is provided with a guiding roll (7′).

## Revendications

1. Lunette à auto-centrage comportant un organe mobile (1) attaquant deux bras de levier (5, 5′) placés dans un boîtier (10), des rouleaux de préhension (2, 3, 14) étant placés aux extrémités extérieures de l'organe mobile (1) et des bras de levier (5, 5′) et un chariot en croix (12) étant placé sur l'organe mobile (1), caractérisé en ce que les extrémités intérieures des bras de levier (5, 5′) sont soumis à un guidage forcé par l'intermédiaire de trous oblongs (8, 8′) sur le chariot en croix (12), et en ce que les bras de levier (5, 5′) peuvent être remplacés par d'autres bras de levier de dimension différentes, en conservant la caractéristique d'autocentrage.

2. Lunette selon la revendication 1, caractérisé en ce que des rouleux (7, 9) reçus dans les trous oblongs (8, 8′) sont placés sur le chariot en croix (12).

3. Lunette selon la revendication 1 ou la revendication 2, caractérisé en ce qu'une voie de guidage (13) est formée en plus sur la zone terminale intérieure du bras de levier (5′) et en ce qu'un galet de guidage (7′) se trouve sur le chariot en croix (12).